# EUROPÄISCHE PATENTSCHRIFT

(11) **EP 4 724 966 B1**
(45) Veröffentlichungstag und Bekanntmachung des Hinweises auf die Patenterteilung: **26.08.2026**
(21) Anmeldenummer: 25705874.3
(22) Anmeldetag: 12.02.2025
(51) Int. Cl.: G06Q 10/20, G06Q 50/40

(54) **VERFAHREN ZUR INSTANDHALTUNG EINER MEHRZAHL VON GLEICHARTIGEN KOMPONENTEN FÜR LUFTFAHRZEUGE SOWIE SYSTEM**
METHOD FOR MAINTAINING A PLURALITY OF SIMILAR COMPONENTS FOR AIRCRAFT, AND SYSTEM
PROCÉDÉ DE MAINTIEN D'UNE PLURALITÉ DE COMPOSANTS SIMILAIRES POUR AÉRONEF, ET SYSTÈME

(30) Priorität: 13.02.2024 DE 102024103992
(43) Veröffentlichungstag der Anmeldung: 15.04.2026
(73) Patentinhaber: Lufthansa Technik AG, 22335 Hamburg (DE)
(72) Erfinder: POOLE, Kevin, 22763 Hamburg (DE); MARINO, Francesco, 22083 Hamburg (DE)
(74) Vertreter: Müller Verweyen
(86) Internationale Anmeldenummer: PCT/EP2025/053714
(87) Internationale Veröffentlichungsnummer: WO 2025/172356

(56) Entgegenhaltungen:
- AU-A1- 2017 210 590
- US-A1- 2017 323 239
- US-A1- 2019 304 212
- US-A1- 2021 335 059
- US-B1- 8 340 948

## Beschreibung

Die vorliegende Erfindung betrifft ein Verfahren zur Instandhaltung einer Mehrzahl von gleichartigen Komponenten für Luftfahrzeuge mit den Merkmalen des Oberbegriffs von Anspruch 1 sowie ein System mit den Merkmalen des Oberbegriffs von Anspruch 15.

Aus dem Stand der Technik sind diverse Ansätze zur Instandhaltung von Komponenten eines Luftfahrzeugs bekannt. Ein Instandhaltungsereignis kann beispielsweise lediglich die Inspektion einer Komponente umfassen, das Tauschen bestimmter Betriebsmittel oder Unterkomponenten, die Reparatur der Komponente oder den Tausch der gesamten Komponente. Es wird grundsätzlich zwischen geplanten und ungeplanten Instandhaltungsmaßnahmen unterschieden. Geplante Instandhaltungsereignisse können beispielsweise in vorgegebenen zeitlichen Intervallen, beispielsweise monatlich oder jährlich, oder nach Erreichen einer vordefinierten Zahl an Flugstunden oder Flugzyklen durchgeführt werden. Die Intervalle solcher geplanten Instandhaltungsereignisse werden üblicherweise so gewählt, dass auftretende technische Fehler den Betrieb nicht stören. Davon zu unterscheiden sind ungeplante Instandhaltungsereignisse, die aufgrund eines unerwarteten technischen Fehlers durchgeführt werden müssen. Da ungeplante Instandhaltungsereignisse den Flugbetrieb stören, verfolgen Fluggesellschaften und Instandhaltungsbetriebe das Ziel, den Anteil an ungeplanten Instandhaltungsereignissen zu reduzieren.

Zu diesem Zweck existieren im Stand der Technik Ansätze zur Zustandsüberwachung von Komponenten. Mittels der Auswertung bestimmter Messwerte wird versucht, den technischen Zustand der Komponente in Echtzeit zu ermitteln (Diagnose) bzw. die noch verbleibende Betriebszeit einer Komponente vorherzusagen (Prognose). Mit diesen Ansätzen kann bereits vor dem Eintreten eines technischen Fehlers eine geeignete Instandhaltungsmaßnahme eingeleitet werden, bzw. es können die Intervalle zwischen zwei Instandhaltungsmaßnahmen optimal ausgenutzt werden. So kann durch die Zustandsüberwachung der Flugbetrieb sicherer und kosteneffizienter gestaltet werden.

Aus der US 10,228,687 B2 ist ein Verfahren bekannt, um einen Fehler in einer Klimatisierungseinrichtung, in englischer Sprache als "air-conditioning pack" bezeichnet, zu diagnostizieren. Hierzu werden Daten einer solchen Klimatisierungseinrichtung mit Schwellwerten verglichen.

Die US 2021/0335059 A1 offenbart ein bodengestütztes Computersystem, das Daten zu Leistungsparametern für ähnliche Komponenten, die in ähnlichen Flugzeugen verbaut sind, empfängt. Das bodengestützte Computersystem ermittelt entsprechende Verschleißgrade und Verschleißveränderungsraten für die jeweiligen ähnlichen Komponenten.

Die US 2017/0323239 A1 offenbart ein Verfahren zum Bereitstellen eines ersten Satzes von Computersystemen mit Zugriff auf eine Empfehlung bezüglich des Betriebs eines Flugzeugs in einer oder mehreren Flugzeugflotten.

Es ist Aufgabe der vorliegenden Anmeldung ein verbessertes Verfahren zur Instandhaltung einer Mehrzahl von gleichartigen Komponenten für Luftfahrzeuge bereitzustellen sowie ein entsprechend verbessertes System.

Die Aufgabe wird durch die Merkmale der unabhängigen Ansprüche gelöst. Weitere bevorzugte Ausführungsformen der Erfindung sind den Unteransprüchen, den Figuren und der dazugehörigen Beschreibung zu entnehmen.

Gemäß einem ersten Aspekt dieser Anmeldung wird die Aufgabe gelöst durch ein Verfahren zur Instandhaltung einer Mehrzahl von gleichartigen Komponenten für Luftfahrzeuge, wobei jede der gleichartigen Komponenten über einen eindeutigen Identifikationscode identifizierbar ist, wobei das Verfahren die folgenden Verfahrensschritte umfasst:
Schritt a) Durchführung von Instandhaltungsmaßnahmen an wenigstens einer Teilmenge der gleichartigen Komponenten, wobei das Durchführen einer Instandhaltungsmaßnahme jeweils das Ermitteln von möglichen Fehlerzuständen und bei Vorhandensein eines Fehlerzustandes das Zuordnen des ermittelten Fehlerzustandes zu einer Zustandskategorie aus einer Mehrzahl von vordefinierten Zustandskategorien umfasst.
Schritt b) Speichern der so ermittelten Zustandskategorien jeweils verknüpft mit dem Identifikationscode derjenigen Komponente, bei der der Fehlerzustand festgestellt wurde, und verknüpft mit einem Zeitstempel, der den Zeitpunkt des Feststellens des Fehlerzustandes kennzeichnet, als Fehlerdatenbestand.
Schritt c) Erstellen eines Berechnungsmodells, das dazu eingerichtet ist, individualisiert für einzelne Komponenten der gleichartigen Komponenten auf Basis einer aktuellen Teilmenge eines Betriebsdatenbestandes die Wahrscheinlichkeit für das Vorliegen und/oder für das zukünftige Auftreten wenigstens einer der vordefinierten Zustandskategorien zu ermitteln, wobei der Betriebsdatenbestand Messwerte umfasst, mit denen der Betriebszustand individualisiert für einzelne Komponenten der gleichartigen Komponenten charakterisierbar ist, wobei innerhalb des Betriebsdatenbestandes die Messwerte jeweils mit dem Identifikationscode der entsprechenden Komponente und mit einem dem jeweiligen Messwert zugeordneten Zeitstempel verknüpft sind, wobei das Erstellen des Berechnungsmodells auf Basis einer historischen Teilmenge des Betriebsdatenbestandes und auf Basis des Fehlerdatenbestandes erfolgt, wobei innerhalb der historischen Teilmenge die Messwerte mit Zeitstempeln verknüpft sind, die zeitlich vor den Zeitstempeln liegen, mit denen die Messwerte der aktuellen Teilmenge verknüpft sind. Vorzugsweise werden die Zeitstempel den Messwerten zugeordnet, wenn die Messwerte erstmals auf einem Datenspeicher gespeichert werden.
Schritt d) Ermitteln der Wahrscheinlichkeit für das Vorliegen und/oder für das zukünftige Auftreten wenigstens einer der vordefinierten Zustandskategorien individualisiert für einzelne Komponenten der gleichartigen Komponenten auf Basis einer aktuellen Teilmenge des Betriebsdatenbestandes, indem die aktuelle Teilmenge durch das erstellte Berechnungsmodell verarbeitet wird.
Schritt e) Generieren einer Handlungsanweisung zum Durchführen einer Instandhaltungsmaßnahme individualisiert für einzelne Komponenten der gleichartigen Komponenten auf Basis der ermittelten Wahrscheinlichkeit für das Vorliegen und/oder das zukünftige Auftreten einer der vordefinierten Zustandskategorien.
Schritt f) Durchführen einer Instandhaltungsmaßnahme an einer der gleichartigen Komponenten auf Basis der generierten Handlungsanweisung.

Die Erfindung hat erkannt, dass die in dem Fehlerdatenbestand, enthaltenen Informationen entscheidend dazu beitragen, ein qualitativ hochwertiges Berechnungsmodell zu erstellen. Durch die Berücksichtigung dieser Informationen zusammen mit den Informationen des Betriebsdatenbestandes kann das Berechnungsmodell mit einer hinreichend hohen Genauigkeit die Wahrscheinlichkeit des Vorliegens und/oder des zukünftigen Auftretens einer bestimmten Zustandskategorie berechnen. Das Berechnungsmodell kann somit zur Diagnose und/oder Prognose des Vorliegens bzw. des Eintretens von Zustandskategorien genutzt werden, wodurch die Instandhaltung der Komponenten effizienter gestaltet werden kann. Anhand dieser Zustandskategorie kann beispielsweise auf den der Zustandskategorie zu Grunde liegenden Fehlerzustand rückgeschlossen werden, oder die möglichen Fehlerzustände können zumindest eingegrenzt werden.

Durch die Verwendung der historischen Teilmenge des Betriebsdatenbestandes und des Fehlerdatenbestandes für die Erstellung des Berechnungsmodells, wird es ermöglicht, Zusammenhänge zwischen den ermittelten Zustandskategorien und den erfassten Messwerten festzustellen. Hierzu trägt insbesondere die Verwendung der Zustandskategorien bei, die als eine Art "Label" dienen, um die verschiedenen Fehlerzustände praxistauglich im Instandhaltungsbetrieb zu kategorisieren. Durch die Verwendung von vordefinierten Zustandskategorien wird deren maschinelle Verarbeitung erleichtert, sodass diese effizient zur Erstellung des Berechnungsmodells genutzt werden können.

Durch die Betrachtung einer Mehrzahl von Komponenten gleicher Art und durch das Dokumentieren der festgestellten Fehlerzustände mittels der Zuordnung zu vordefinierten Zustandskategorien, können kausale Zusammenhänge zwischen der Änderung eines Messwertes oder mehrerer Messwerte und dem Vorhandensein eines einer Zustandskategorie zugrundeliegenden Fehlerzustands identifiziert und bei der Erstellung der Handlungsanweisung berücksichtigt werden. Ferner werden die gleichartigen Komponenten auch in einer Vielzahl von Luftfahrzeugen, vorzugsweise in Flugzeugen des gleichen Typs, betrieben, sodass eine hinreichend große Datenmenge für die Erstellung des Berechnungsmodells bereitgestellt werden kann. Somit ist das vorgeschlagene Berechnungsmodell in der Lage, mit einer verbesserten Genauigkeit die Wahrscheinlichkeit für des Vorliegen und/oder das zukünftige Auftreten einer bestimmten Zustandskategorie zu berechnen. Durch das Durchführen der Verfahrensschritte a) bis f) wird die Systemzuverlässigkeit der gleichartigen Komponenten insgesamt verbessert.

Eine Handlungsanweisung im Sinne dieser Anmeldung kann sämtliche Tätigkeiten umfassen, die üblicherweise bei der Instandhaltung der entsprechenden Komponente anfallen; dies kann beispielsweise den Austausch der gesamten Komponente oder den Tausch von Unterkomponenten umfassen; dies kann beispielsweise auch die Reparatur von Unterkomponenten und/oder das Vornehmen von Justier- und/oder Einstelltätigkeiten umfassen. Die Handlungsanweisung kann beispielsweise in Form von Text und/oder Sprache ausgegeben werden. Die Handlungsanweisung kann beispielsweise auf Maßnahmen verweisen, die in einem Handbuch des Herstellers des Luftfahrzeugs oder der Komponente beschrieben sind. Wenn es sich bei dem Luftfahrzeug um ein Flugzeug handelt, kann beispielsweise auf ein Aircraft Maintenance Manual (AMM) und/oder auf ein Component Maintenance Manual (CMM) verwiesen werden.

Dadurch, dass die Handlungsanweisung individualisiert für eine bestimmte Komponenten ausgegeben wird, kann eine aufwendige Fehlersuche vermieden werden. Die Handlungsanweisung für eine Komponente mit einem bestimmten Identifikationscode wird vorzugsweise basierend auf einer aktuellen Teilmenge des Betriebsdatenbestandes generiert, die auch von dieser Komponente generiert wurde. Es versteht sich von selbst, dass die aktuelle Teilmenge des Betriebsdatenbestandes im Betrieb fortlaufend aktualisiert und/oder erweitert werden kann.

Vorzugsweise umfasst der Betriebsdatenbestand eine Mehrzahl von Betriebsdatensätzen. Ein solcher Betriebsdatensatz umfasst wenigstens einen Messwert, einen Identifikationscode und einen Zeitstempel. Selbstverständlich kann ein solcher Betriebsdatensatz noch weitere Datenfelder umfassen, wie beispielsweise ein Kennzeichen des Luftfahrzeugs, in dem die Komponente beim Generieren der Messwerte betrieben wurde. Je nach Zeitstempel der Betriebsdatensätze werden diese der historischen Teilmenge oder der aktuellen Teilmenge des Betriebsdatenbestandes zugeordnet. Der Betriebsdatenbestand kann ständig durch neue Betriebsdatensätze erweitert werden, die dann dem Berechnungsmodell als Eingangsdaten zur Verfügung gestellt werden. Betriebsdatensätze der aktuellen Teilmenge des Betriebsdatenbestandes können mit der Zeit zum Bestandteil der historischen Teilmenge des Betriebsdatenbestandes werden, so dass anhand dessen das Berechnungsmodell verbessert werden kann.

In entsprechender Weise umfasst vorzugsweise auch der Fehlerdatenbestand eine Mehrzahl von Fehlerdatensätzen. Ein solcher Fehlerdatensatz umfasst wenigstens eine Zustandskategorie, einen Identifikationscode und einen Zeitstempel. Selbstverständlich kann ein solcher Fehlerdatensatz noch weitere Datenfelder umfassen. Der Fehlerdatenbestand kann beispielsweise auch im Laufe der Zeit durch weitere Fehlerdatensätze aktualisiert und/oder erweitert werden.

Die Datensätze des Betriebsdatenbestandes und/oder des Fehlerdatenbestandes können beispielsweise auf verschiedenen physischen Speichern verteilt sein. Die Betriebsdatensätze können beispielsweise auf Speichern verschiedener Luftfahrzeuge und/oder auf Speichern von stationären Computern einer oder mehrerer Bodenstationen verteilt sein.

Unter gleichartigen Komponenten sind im Sinne dieser Anmeldung baugleiche Komponenten oder im Wesentlichen baugleiche Komponenten zu verstehen. Baugleiche Komponenten sind für den Einbau in Luftfahrzeugen untereinander austauschbar. Unter im Wesentlichen baugleiche Komponenten fallen insbesondere Komponenten, die sich hinsichtlich ihrer technischen Funktion und technischen Leistungsdaten gleichen, aber abweichende Schnittstellen, beispielsweise abweichende Anschlüsse, für den Einbau im Luftfahrzeug aufweisen.

Es versteht sich von selbst, dass auch nach der Aufteilung des Betriebsdatenbestandes in eine historische und eine aktuelle Teilmenge die Verknüpfung von Messwerten, Zeitstempeln und Identifikationscodes bestehen bleibt.

Das Charakterisieren des Betriebszustandes im Sinne dieser Anmeldung kann anhand verschiedenster Betriebsparameter erfolgen. Ein Betriebsparameter kann beispielsweise ein Zustand sein (beispielsweise "An"-"Aus", "offen"-"geschlossen"), aber auch eine physikalische Größen, wie beispielsweise ein Druck , eine Temperatur oder ein Massenstrom.

Vorzugsweise handelt es sich bei den Luftfahrzeugen um Flugzeuge des gleichen Typs, beispielsweise um Flugzeuge des Typs Airbus A320, also um im Wesentlichen baugleiche Flugzeuge.

Vorzugsweise umfasst das Erzeugen des Betriebsdatenbestandes die folgenden Verfahrensschritte:
Schritt A) Betreiben einer Vielzahl von Luftfahrzeugen, in denen jeweils wenigstens eine der gleichartigen Komponenten eingebaut ist.
Schritt B) Generieren der Messwerte, mit denen individualisiert für einzelne Komponenten der gleichartigen Komponenten deren Betriebszustand charakterisierbar ist, wenn diese sich in den jeweiligen Luftfahrzeugen in Betrieb befinden.
Schritt C) Speichern der generierten Messwerte verknüpft mit den Identifikationscodes der entsprechenden Komponenten und mit den entsprechenden Zeitstempeln als Betriebsdatenbestand.

Durch die Schritte A) bis C) kann der Betriebsdatenbestand derart generiert werden, dass die Daten sowohl für die Erstellung des Berechnungsmodells als auch als Eingangsdaten für das Berechnungsmodell geeignet sind.

Es wird weiter vorgeschlagen, dass von einem der Luftfahrzeuge im Betrieb generierte Daten des Betriebsdatenbestandes an eine Bodenstation übermittelt werden, und wobei das Berechnungsmodell auf einem Computer der Bodenstation ausgeführt wird. Die Daten des Betriebsdatenbestandes werden vorzugsweise bereits während des Fluges, beispielsweise in Form eines sogenannten Aircraft Condition Monitoring System (ACMS) Reports, übertragen, und/oder die Übertragung erfolgt nach der Landung, beispielsweise in Form von sogenannten Full Flight Data. Selbstverständlich sind auch alternative Übertragungswege möglich, beispielsweise unter Nutzung einer Internetverbindung. Die Bodenstation kann auch verschiedene räumlich voneinander getrennte Untereinheiten umfassen. Vorzugsweise umfasst die Bodenstation einen oder mehrere Datenspeicher mit einer Datenbank, auf der die aktuelle Teilmenge des Betriebsdatenbestandes, die historische Teilmenge des Betriebsdatenbestandes und der Fehlerdatenbestand gespeichert sind.

Es wird weiter vorgeschlagen, dass in einem der Luftfahrzeuge wenigstens zwei der gleichartigen Komponenten eingebaut sind, wobei ein Messwert, der den Betriebszustand der ersten Komponente in dem Luftfahrzeug charakterisiert, mit einem Messwert, der den Betriebszustand der zweiten Komponente innerhalb desselben Luftfahrzeugs charakterisiert, verglichen wird, wobei der Vergleich dieser Messwerte ein zusätzlicher Bestandteil der historischen Teilmenge des Betriebsdatenbestandes und/oder der aktuellen Teilmenge des Betriebsdatenbestandes ist, und/oder der Vergleich dieser Messwerte durch das Berechnungsmodell durchgeführt wird. Die beiden Komponenten eines Flugzeugs werden vorzugsweise zeitlich parallel betrieben. Vorzugsweise umfasst der Vergleich das Bilden der Differenz der beiden Messwerte, die den gleichen oder annähernd gleichen Zeitstempel aufweisen, unter Berücksichtigung des Vorzeichens des ermittelten Differenzwertes. Die beiden Messwerte, die miteinander verglichen werden, stammen vorzugsweise von sich einander entsprechenden Sensoren der beiden innerhalb desselben Flugzeugs eingebauten gleichartigen Komponenten. Durch den Vergleich zweier Messwerte zweier gleichartiger Komponenten, die in demselben Flugzeug eingebaut sind, wird die Datenbasis für die Ermittlung von Zustandskategorien verbessert. So kann beispielsweise der gleichzeitige Anstieg eines bestimmten Messwerts an beiden Komponenten eines Luftfahrzeugs darauf hindeuten, dass dieser Anstieg nicht auf das Vorliegen eines Fehlerzustandes zurückzuführen ist, sondern beispielsweise auf eine Veränderung der Umgebungsbedingungen oder des Flugzustandes. Somit kann insgesamt die Qualität der Ergebnisse des Berechnungsmodells verbessert werden. Um die beiden Komponenten, die in ein und demselben Flugzeug vorgesehen sind, auch dem entsprechenden Flugzeug zuordnen zu können, umfasst der Betriebsdatenbestand vorzugsweise noch eine weitere Art von Identifikationscodes, mit denen das Luftfahrzeug identifizierbar ist, in dem die Komponente während der Datenerzeugung eingebaut ist. Diese weitere Art von Identifikationscodes ist dann ebenfalls mit den zugehörigen Messwerten verknüpft.

Vorzugsweise ist zusätzlich eine Zustandskategorie vorgesehen, die einen intakten Systemzustand einer der gleichartigen Komponenten kennzeichnet, wobei im Verfahrensschritt a) bei Nichtvorhandensein eines Fehlerzustandes die Zuordnung zu dieser Zustandskategorie erfolgt. Damit kann auch das Nichtvorhandensein eines Fehlerzustandes als Information für die Erstellung des Berechnungsmodells genutzt werden.

Vorzugsweise wird der Schritt d) mit neu generierten Daten, die der aktuellen Teilmenge des Betriebsdatenbestandes hinzugefügt werden oder die die aktuelle Teilmenge ersetzen, wiederholt, so dass die Wahrscheinlichkeit für das Vorliegen und/oder für das zukünftige Auftreten wenigstens einer der vordefinierten Zustandskategorien in vorgegebenen zeitlichen Abständen aktualisiert bereitgestellt wird. So kann die Wahrscheinlichkeit für das Vorliegen und/oder für das zukünftige Auftreten wenigstens einer der vordefinierten Zustandskategorien kontinuierlich ermittelt werden. Im Bedarfsfall wird eine Gegenmaßnahme in Form der Handlungsanweisung für eine Instandhaltungsmaßnahme erstellt. Durch die kontinuierliche Ermittlung dieser Wahrscheinlichkeiten kann die Instandhaltungsmaßnahme in besonders vorteilhafter Weise vor Eintritt des der Zustandskategorie zugrunde liegenden Fehlerzustandes durchgeführt werden; die Instandhaltungsmaßnahme kann so als präventive Instandhaltungsmaßnahme durchgeführt werden.

Es wird weiter vorgeschlagen, dass der Schritt a) die folgenden Teilschritte umfasst: Durchführen von Instandhaltungsmaßnahmen an wenigstens einer Teilmenge der gleichartigen Komponenten in einem Einbauzustand, wobei in dem Einbauzustand die jeweilige Komponente in einem der Luftfahrzeuge eingebaut ist; und Durchführen von Instandhaltungsmaßnahmen an wenigstens einer Teilmenge der gleichartigen Komponenten in einem Ausbauzustand, wobei in dem Ausbauzustand die jeweilige Komponente aus einem der Luftfahrzeuge ausgebaut ist. Es hat sich gezeigt, dass durch die Berücksichtigung der Gesamtheit der verfügbaren Instandhaltungsdaten betreffend die geleichartigen Komponenten für die Erstellung des Berechnungsmodells signifikant bessere Ergebnisse erzielt werden können. Die Instandhaltung von Komponenten kann im eingebauten Zustand am Flugzeug in der Regel nur eingeschränkt erfolgen. Instandhaltungsmaßnahmen mit einem höheren Detail- und/oder größeren Zerlegungsgrad als im eingebauten Zustand können nur in einer entsprechend ausgestatteten Werkstatt erfolgen. Im eingebauten Zustand werden häufig andere Fehlerzustände diagnostiziert als im ausgebauten Zustand. Somit kann die Datenbasis aufgrund der Verwendung von Daten, die bei Instandhaltungsmaßnahmen im Einbauzustand und im Ausbauzustand generiert werden, verbessert werden. Unter einem ausgebauten Zustand ist im Sinne dieser Anmeldung ein Zustand zu verstehen, in dem die Komponente weder strukturell noch funktional mit einem Luftfahrzeug verbunden ist. Mit anderen Worten: Die Komponente kann im ausgebauten Zustand unabhängig von den Luftfahrzeugen transportiert werden.

Es wird weiter vorgeschlagen, dass jede der gleichartigen Komponenten wenigstens einen Sensor umfasst, mit dem im Betrieb Messwerte zum Charakterisieren des Betriebszustandes dieser Komponente generiert werden; und/oder jedes der Luftfahrzeuge wenigstens einen Sensor umfasst, mit dem im Betrieb Messwerte zum Charakterisieren des Betriebszustandes einer der in dem Luftfahrzeug eingebauten Komponente der gleichartigen Komponenten generiert werden. Auf diese Weise lassen sich besonders effizient die für das Berechnungsmodell erforderlichen Messwerte generieren. Es ist auch nicht zwingend erforderlich, dass die Sensoren Bestandteil der Komponente selbst sind; es kommen daher beispielsweise auch Sensoren infrage, die in dem Luftfahrzeug zur Überwachung benachbarter Komponenten vorgesehen sind. Es kommen dabei unterschiedliche Sensortypen in Betracht, beispielsweise Sensoren zum Bestimmen einer Temperatur, der Position eines Stellteils, eines Luftdrucks und/oder einer Durchflussmenge.

Vorzugsweise ist das Berechnungsmodell dazu eingerichtet, einen allgemeinen Systemzustand individualisiert für einzelne Komponenten der gleichartigen Komponenten zu ermitteln. Es kann so beispielsweise erst bei einem kritischen allgemeinen Systemzustand der Komponente eine Handlungsanweisung ausgegeben werden. Der allgemeine Systemzustand kann beispielsweise auf Basis der ermitteln Wahrscheinlichkeit für das Vorliegen und/oder für das zukünftige Auftreten wenigstens einer der vordefinierten Zustandskategorien ermittelt werden.

Vorzugsweise wird der allgemeine Systemzustand durch einen numerischen Wert repräsentiert, wobei das Berechnungsmodell dazu eingerichtet ist, den den allgemeine Systemzustand repräsentierenden numerischen Wert mit einem ersten und einem zweiten Schwellwert zu vergleichen, wobei bei einem numerischen Wert zwischen dem ersten Schwellwert und dem zweiten Schwellwert ein Signal ausgegeben wird, und wobei bei einem numerischen Wert, der den zweiten Schwellwerte überschreitet, das Generieren der Handlungsanweisung gemäß Schritt e) ausgelöst wird. Der numerische Werte zum Repräsentieren des allgemeinen Systemzustandes bietet den Vorteil, dass er einfach und effizient verarbeitet werden kann. Die Schwellwerte werden beispielsweise empirisch festgelegt.

Vorzugsweise wird das Berechnungsmodell im Schritt c) wenigstens teilweise durch maschinelles Lernen erstellt und/oder angepasst, wobei die historische Teilmenge des Betriebsdatenbestandes und der Fehlerdatenbestand als Trainingsdaten zum maschinellen Lernen genutzt werden. Es hat sich gezeigt, dass sich durch maschinelles Lernen kausale Zusammenhänge zwischen dem Fehlerdatenbestand und der historischen Teilmenge des Betriebsdatenbestandes besonders effizient ermitteln lassen. Auf diese Weise kann die Qualität des Berechnungsmodells gesteigert werden.

Es hat sich als vorteilhaft erwiesen, wenn das maschinelle Lernen durch den Einsatz sogenannter Boosting-Algorithmen erfolgt. Durch die Integration von Boosting-Algorithmen kann die Leistung der Diagnose und/oder Prognose für das Vorliegen bzw. für das Eintretens von Zustandskategorien verbessert werden. Es hat sich gezeigt, dass diese Algorithmen die Vorhersagegenauigkeit und die Gesamtleistung bei verschiedenen Aufgaben im Bereich des maschinellen Lernens verbessern. Insbesondere durch ihre Anpassungsfähigkeit und ihre Vielseitigkeit sind Boosting-Algorithmen für die hier vorgesehene Anwendung geeignet. Besonders hervorzuheben ist im Kontext der hier vorgesehenen Anwendung ihre Fähigkeit, komplizierte Datenbeziehungen geschickt zu verwalten und Rauschen abzuschwächen.

Es wird weiter vorgeschlagen, dass es sich bei den gleichartigen Komponenten jeweils um eine Klimatisierungseinrichtung, umfassend eine Kühlturbine, wenigstens einen, vorzugsweise vier, Wärmetauscher und ein Durchflusssteuerventil, handelt. Eine Klimatisierungseinrichtung, auch als Air Conditioning Pack (ACP) bezeichnet, kann bei Vorliegen eines Fehlerzustandes zu Betriebseinschränkungen, unangenehm hohen Kabinentemperaturen oder gar Rauchentwicklung führen. Aus diesem Grund hat das vorgeschlagene Verfahren bei Anwendung auf eine solche Klimatisierungseinrichtung besonders vorteilhafte Effekte. Die hier als Kühlturbine bezeichnete Komponente wird in der Fachsprache als Air Cycle Machine (ACM) bezeichnet; sie umfasst neben einer Turbine auch einen Kompressor.

Vorzugsweise umfasst die Mehrzahl von vordefinierten Zustandskategorien einen oder mehrere der folgenden Zustandskategorien: schadhafte Kühlturbine, schadhafter Wärmetauscher und/oder schadhaftes Durchflusssteuerventil. Durch die Berücksichtigung zumindest einer dieser Zustandskategorien kann bereits eine signifikante Verbesserung der Systemzuverlässigkeit von Klimatisierungseinrichtungen erreicht werden.

Gemäß einem zweiten Aspekt dieser Anmeldung wird die eingangs genannte Aufgabe gelöst durch ein System mit einer Flotte umfassend eine Mehrzahl von Luftfahrzeugen sowie eine Mehrzahl gleichartiger Komponenten, insbesondere eine Mehrzahl gleichartiger Klimatisierungseinrichtungen umfassend eine Kühlturbine, wenigstens einen, vorzugsweise vier, Wärmetauscher und wenigstens ein Durchflusssteuerventil, wobei in jedes der Luftfahrzeuge wenigstens eine der gleichartigen Komponenten eingebaut ist, wobei die Instandhaltung wenigstens einer Teilmenge der gleichartigen Komponenten unter Anwendung des Verfahrens gemäß dem ersten Aspekt dieser Anmeldung, ggf. unter Berücksichtigung der vorangehend beschriebenen Weiterentwicklungen, durchgeführt wird, wobei das System ein Computerprogrammprodukt umfasst, das dazu eingerichtet ist, die Verfahrensschritte c) bis e) gemäß dem ersten Aspekt dieser Anmeldung durchzuführen. Bezüglich der mit dem vorgeschlagenen System gemäß dem zweiten Aspekt dieser Anmeldung verbundenen technischen Wirkungen und Vorteile wird auf die vorangehenden Ausführungen im Zusammenhang mit dem Verfahren gemäß dem ersten Aspekt dieser Anmeldung verwiesen. Vorzugsweise ist das Computerprogrammprodukt in einem internen Speicher eines Computers, der beispielsweise Bestandteil der Bodenstation ist, geladen und wird durch diesen Computer ausgeführt.

Die Erfindung wird im Folgenden anhand bevorzugter Ausführungsformen unter Bezugnahme auf die beigefügten Figuren erläutert. Dabei zeigen:
- Fig. 1: eine schematische Darstellung einer Komponente;
- Fig. 2: eine erste schematische Darstellung eines Verfahrens,
- Fig. 3: eine zweite schematische Darstellung eines Verfahrens;
- Fig. 4: eine schematische Darstellung eines Vergleichs von Messwerten;
- Fig. 5: einen zeitlichen Verlauf eines allgemeinen Gesundheitszustandes einer Komponente;
- Fig. 6: zeitliche Verläufe der Wahrscheinlichkeit des Vorliegens verschiedener Zustandskategorien; und
- Fig. 7: ein System.

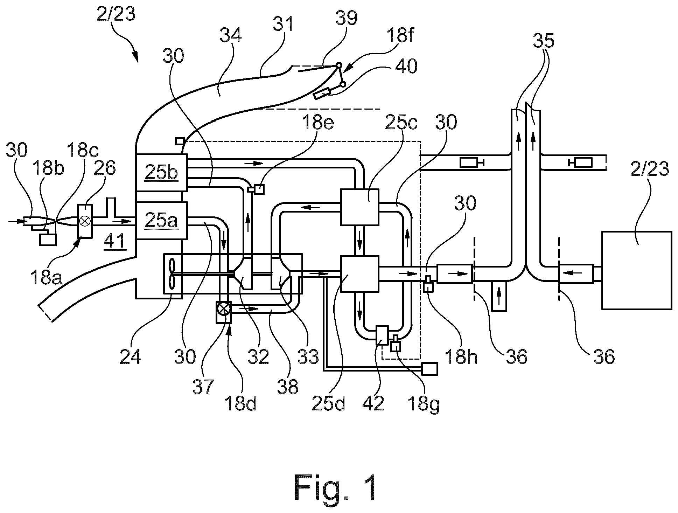

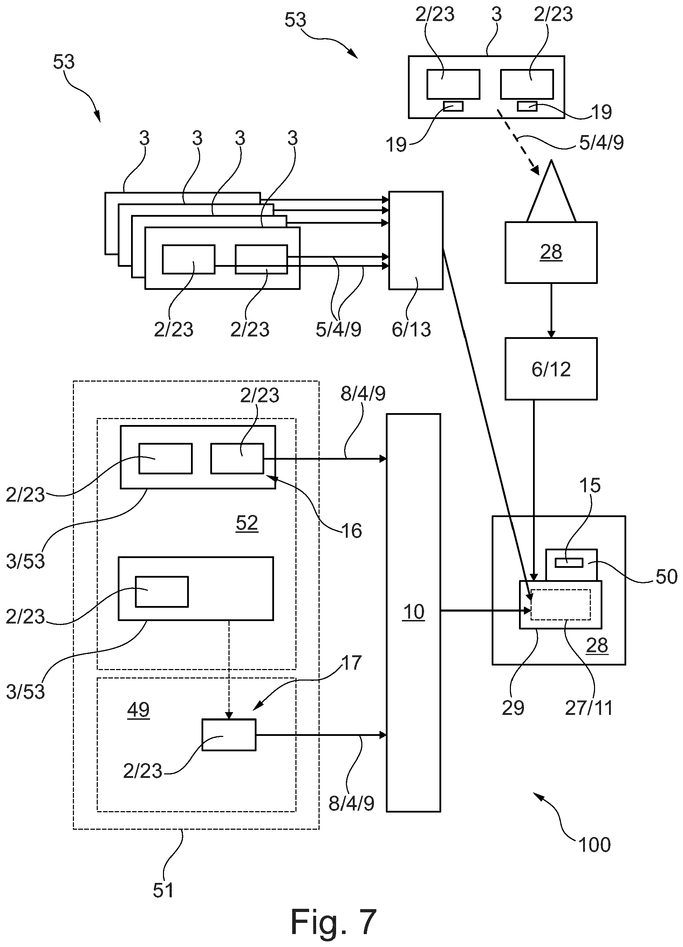

Figur 1 zeigt eine Komponente 2 für ein Luftfahrzeug 3 (siehe Figure 7), nämlich eine Klimatisierungseinrichtung 23 für ein Flugzeug, auch als Air Conditioning Pack (ACP) bezeichnet.

Die Klimatisierungseinrichtung 23 umfasst ein Durchflusssteuerventil 26, vier Wärmetauscher 25a bis 25d und eine Kühlturbine 24, auch als Air Cylce Machine (ACM) bezeichnet. Die Kühlturbine 24 umfasst wiederum einen Kompressor 32 und eine Turbine 33.

Mittels der Klimatisierungseinrichtung 23 kann Zapfluft 30 aus einem Triebwerk (nicht dargestellt) abgekühlt werden, um entsprechend temperiert in eine Kabine eines Luftfahrzeugs 3 einzuströmen. Mittels des Durchflusssteuerventils 26 wird die Menge an Zapfluft 30 eingestellt, die von dem entsprechenden Triebwerk der Klimatisierungseinrichtung 23 zugeführt wird. Weiterhin umfasst die Klimatisierungseinrichtung 23 einen Strömungskanal 31, durch den kalte Stauluft 34, sogenannte Ram-Air, strömt.

Die Zapfluft 30 wird aus einem heißen Hochdruckbereich des Triebwerks entnommen und strömt durch das Durchflusssteuerventil 26 und anschließend über einen ersten Wärmetauscher 25a, der von der relativ kalten Stauluft 34 des Strömungskanals 31 abgekühlt wird. Von dem ersten Wärmetauscher 25a strömt ein Teil der abgekühlten Zapfluft 30 in den Kompressor 32 der Kühlturbine 24, sodass die Temperatur durch die Verdichtung in dem Kompressor 32 wieder erhöht wird. Die Temperaturdifferenz zwischen der Zapfluft 30 und der Stauluft 34 an dem Wärmetauscher 25b wird so erhöht, um dort mehr Wärmeenergie an die vorbeiströmende Stauluft 34 abzugeben. Von dem Wärmetauscher 25b aus strömt die Zapfluft 30 anschließend über die zwei weiteren Wärmetauscher 25c und 25d unter Abgabe von Wärmeenergie in die Turbine 33 der Kühlturbine 24; der Wärmetauscher 25c wird auf dem Weg zur Turbine 33 zweimal durchströmt. Stromabwärts des Wärmetauschers 25d ist ein Wasserabscheider 42 vorgesehen, mit dem kondensiertes Wasser abgeschieden werden kann. Die Expansion in der Turbine 33 bewirkt eine weitere starke Abkühlung der Zapfluft 30. Nach dem Austritt aus der Turbine 33 durchströmt die Zapfluft 30 ein weiteres Mal den Wärmetauscher 25d, um dort Wärmeenergie aufzunehmen. Die Zapfluft 30 strömt anschließend etwa mit Raumtemperatur über eine Schnittstelle 36 in eine Strömungsleitung 35 des Luftfahrzeugs 3. Weiterhin ist ein Bypassventil 37 dargestellt, über das der Anteil der Zapfluft 30 eingestellt werden kann, der an dem Kompressor 32 vorbeigeführt wird; dieser Anteil der Zapfluft 30 strömt dann über einen Bypass 38 direkt zu der Auslassseite der Turbine 32. Die Menge an Stauluft 34, die in den Strömungskanal 31 strömt, wird durch die Stellung einer Klappe 39 definiert, deren Stellung über einen Aktuator 40 eingestellt werden kann. Ferner zeigt Figur 1 auf der rechten Seite schematisch eine weitere Komponente 2 in Form einer Klimatisierungseinrichtung 23, die mit einer weiteren Strömungsleitung 35 desselben Luftfahrzeugs 3 verbunden ist. Der Aufbau und die Funktionsweise der zweiten, nur schematisch auf der rechten Seite dargestellten Klimatisierungseinrichtung 23 entsprechen dem Aufbau und der Funktionsweise der im Detail dargestellten linken Klimatisierungseinrichtung 23.

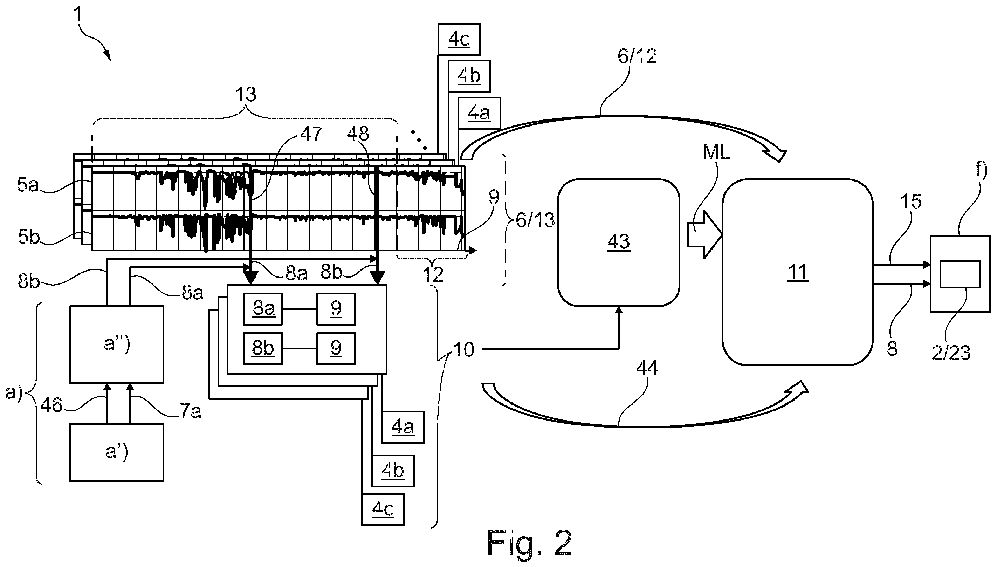

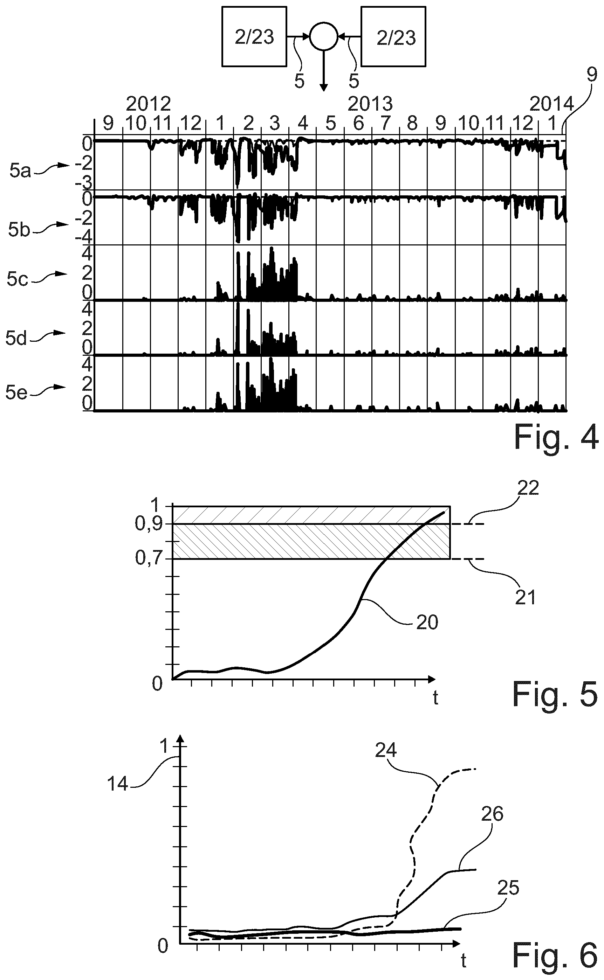

Ferner zeigt die Figur 1 diverse Sensoren 18a-18h, mit denen im Betrieb Messwerte 5 (siehe beispielsweise Figuren 2 und 4) zur Charakterisierung des Betriebszustandes der Klimatisierungseinrichtung 23 generiert werden. Mittels eines Sensors 18a wird die Ventilstellung des Durchflusssteuerventils 26 als Messwert 5 ermittelt. Mittels eines weiteren Sensors 18b wird der Differenzdruck der Zapfluft 30 in einem Strömungskanal stromaufwärts des Durchflusssteuerventils 26 in Bezug zur Umgebung 41 als Messwert 5 ermittelt. Mittels eines Sensors 18c wird stromaufwärts des Durchflusssteuerventils 26 der Druck innerhalb der Strömungsleitung als Messwert 5 ermittelt, also der an der Klimatisierungseinrichtung 23 eingangsseitig anliegende Druck. Weiterhin wird mittels eines Sensors 18d die Ventilstellung des Bypassventils 37 als Messwert 5 ermittelt. Ferner wird mittels des Sensors 18e die Austrittstemperatur der Zapfluft 30 aus dem Kompressor 32 als Messwert 5 ermittelt. Es ist weiterhin ein Sensor 18f vorgesehen, mit dem die Stellung der Klappe 39 zur Steuerung der Menge an einströmender Stauluft 34 als Messwert 5 ermittelt wird. Mittels des Sensors 18g wird die Temperatur stromabwärts des Wasserabscheiders 42 als Messwert 5 ermittelt. Schließlich wird mit dem Senor 18h die Austrittstemperatur der Klimatisierungseinrichtung 23 als Messwert 5 ermittelt, also diejenige Temperatur, mit der die abgekühlte Zapfluft 30 an die Strömungsleitung 35 abgegeben wird.

Klimatisierungseinrichtungen 23 wie vorangehend beschrieben sind bereits aus dem Stand der Technik bekannt.

Die mittels der Sensoren 18a bis 18h ermittelten Messwerte 5 werden als Eingangsdaten für das nachfolgend beschriebene Verfahren 1 (siehe Figuren 2, 3 und 7) zur Instandhaltung einer Mehrzahl der Klimatisierungseinrichtungen 23 genutzt. Die nachfolgende Beschreibung dieses Verfahrens 1 anhand der Klimatisierungseinrichtung 23 eines Flugzeugs ist nur exemplarisch zu verstehen; es lässt sich ebenso auf andere gleichartige Komponenten 2 eines Luftfahrzeugs anwenden.

Figur 2 zeigt schematisch ein Verfahren 1 zur Instandhaltung einer Mehrzahl von Klimatisierungseinrichtungen 23, deren Aufbau und Funktionsweise bereits aus der Figur 1 bekannt ist. Es sind beispielhaft die Messwerte 5a und 5b dargestellt, die den Betriebszustand individualisiert für eine der Klimatisierungseinrichtungen 23 charakterisieren. Bei den Messwerten 5a und 5b handelt es sich beispielsweise um Messwerte 5, die mit zwei der Sensoren 8a bis 18h aus Figur 1 ermittelt wurden. Nur zur besseren Übersicht werden hier nur zwei Messwerte 5a und 5b zeichnerisch dargestellt. Der betrachteten Klimatisierungseinrichtung 23 ist ein Identifikationscode 4a zugeordnet. Es ist zeichnerisch angedeutet, dass derartige Messwerte 5a und 5b auch noch für weitere Klimatisierungseinrichtungen 23 mit den Identifikationscodes 4b und 4c erfasst werden. Selbstverständlich wird man in der Praxis die Messwerte 5a und 5b für mehr als nur drei gleichartige Komponenten 2 in Form von Klimatisierungseinrichtungen 23 erfassen. Die Messwerte 5a und 5b der Klimatisierungseinrichtungen 23 bilden zusammen mit den ihr zugeordneten Identifikationscodes 4a, 4b und 4c und mit entsprechenden Zeitstempeln 9, die beim Speichern der Messwerte 5a und 5b zugeordnet werden, einen Betriebsdatenbestand 6, der in eine historische Teilmenge 13 und in eine aktuelle Teilmenge 12 aufgeteilt wird. Die aktuelle Teilmenge 12 des Betriebsdatenbestandes 6 weist jüngere Zeitstempel 9 auf als die historische Teilmenge 13 des Betriebsdatenbestandes 6. Mit anderen Worten: Die Messwerte 5a, 5b der historischen Teilmenge 13 des Betriebsdatenbestandes 6 sind älter als die aktuelle Teilmenge 12 des Betriebsdatenbestandes 6.

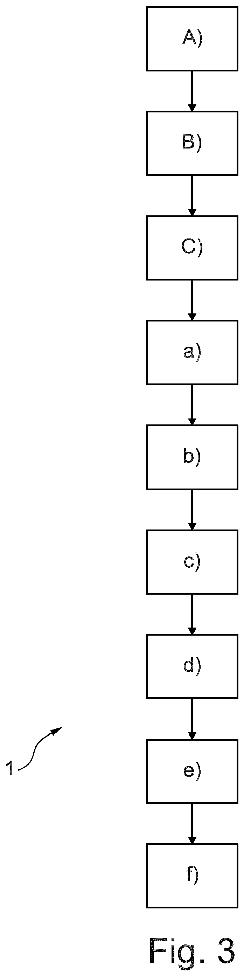

Weiterhin ist in Figur 2 schematisch die Erstellung eines Fehlerdatenbestandes 10 dargestellt. Hierzu wird zunächst ein Verfahrensschritt a) durchgeführt, dessen Einbettung in die Verfahrensschritte A)-C) und b)-f) nachfolgend noch anhand der Figur 3 im Detail erläutert wird.

Der Verfahrensschritt a) umfasst das Durchführen von Instandhaltungsmaßnahmen an mehreren Klimatisierungseinrichtungen 23, wobei das Durchführen dieser Instandhaltungsmaßnahmen jeweils das Ermitteln a') von möglichen Fehlerzuständen 7 und bei Vorhandensein eines Fehlerzustandes 7, das Zuordnen a") des ermittelten Fehlerzustandes 7 zu einer Zustandskategorie 8 aus einer Mehrzahl von vordefinierten Zustandskategorien 8 umfasst. Es ist bei diesem Ausführungsbeispiel ein Katalog umfassend eine Vielzahl von Fehlerzuständen 8 für diverse Fehlerzustände 7 vorgesehen. Es kann beispielsweise bei dem Durchführen der Instandhaltungsmaßnahme festgestellt werden, dass kein Fehler vorliegt; das Nichtvorhandensein eines Fehlers wird dann ebenfalls einer eigens dafür vorgesehenen Zustandskategorie 8b zugeordnet, die einen intakten Systemzustand 46 kennzeichnet. Die Zustandskategorien 8a und 8b werden mit entsprechenden Zeitstempeln 9 und Identifikationscodes 4a bis 4c verknüpft; sie bilden damit den Fehlerdatenbestand 10.

Ferner zeigt Figur 2, dass die historische Teilmenge 13 des Betriebsdatenbestandes 6 zusammen mit dem Fehlerdatenbestand 10 Trainingsdaten 43 bilden, die zur Erstellung - und bei diesem Ausführungsbeispiel auch zur Optimierung - des Berechnungsmodells 11 genutzt werden. Die so generierten Trainingsdaten 43 erlauben es, Zusammenhänge zwischen Änderungen der Messwerte 5a, 5b und bestimmten Betriebszuständen zu ermitteln. Der Pfeil 47 kennzeichnet den Zeitpunkt der Detektion eines bestimmten Fehlerzustandes 7a während einer Instandhaltungsmaßnahme im Schritt a), der der Zustandskategorie 8a zugeordnet wird. Die Messwerte 5a und 5b sind hier als Funktion der Zeit aufgetragen. Es ist ersichtlich, dass die Funktionswerte vor der Detektion des Fehlerzustandes 7a deutliche Schwankungen aufweisen. Durch Zusammenführen der entsprechenden Messwerte 5a und 5b mit der ermittelten Zustandskategorie 8a kann das Berechnungsmodell 11 so erstellt werden, dass es bestimmte Charakteristika des zeitlichen Verlaufs der Messwerte 5a und 5b einer bestimmten Zustandskategorie 8 zuordnen kann. Dies gilt insbesondere, je größer die Anzahl an gleichartigen Komponenten 2 ist, deren Daten zur Erstellung des Betriebsdatenbestandes 6 und des Fehlerdatenbestandes 10 bereitstehen. Ferner kennzeichnet ein Pfeil 48 den Zeitpunkt der Detektion eines intakten Systemzustandes 46. Es ist ersichtlich, dass die Messwerte 5a und 5b vor dem durch den Pfeil 48 gekennzeichneten Zeitpunkt keine Anomalien aufweisen. Bei der Erstellung des Berechnungsmodells 11 wird diese Information genutzt, um das tatsächliche Vorliegen der Zustandskategorie 8b intakter Systemzustand 46 zu definieren.

Das Erstellen des Berechnungsmodells 11 erfolgt hier mittels Verfahren zum maschinellen Lernen ML unter Verwendung der Trainingsdaten 43. Die Verfahren zum maschinellen Lernen umfassen bei diesem Ausführungsbeispiel auch den Einsatz sogenannter Boosting-Algorithmen. Grundsätzlich können aber auch alternative Algorithmen zum Einsatz kommen.

Das auf Basis der historischen Teilmenge 13 des Betriebsdatenbestandes 6 und auf Basis des Fehlerdatenbestandes 10 erstellte Berechnungsmodell 11 ist dazu eingerichtet, eine aktuelle Teilmenge 13 des Betriebsdatenbestandes 6 kontinuierlich zu verarbeiten. So können beispielsweise die Daten der aktuellen Teilmenge 13 dem Berechnungsmodell 11 als Eingangsdaten zur Verfügung gestellt werden. Das Berechnungsmodell 11 verarbeitete diese Eingangsdaten derart, dass die Wahrscheinlichkeit 14 (siehe Figur 6) für das Vorliegen - und bei diesem Ausführungsbeispiel auch für das zukünftige Auftreten - wenigstens einer der vordefinierten Zustandskategorien 8a, 8b individualisiert für einzelne Komponenten 2 der gleichartigen Komponenten 2 ermittelt werden kann.

Auf Basis der ermittelten Wahrscheinlichkeit 14 wird mittels des Berechnungsmodells 11 eine Handlungsanweisung 15 zum Durchführen einer Instandhaltungsmaßnahme individualisiert für die betroffene Klimatisierungseinrichtung 23 generiert. Auf Basis dieser Handlungsanweisung 15 wird anschließend in einem Verfahrensschritt f) an der betreffenden Klimatisierungseinrichtung 23 die von dem Berechnungsmodell 11 vorgeschlagene Handlungsanweisung 15 durchgeführt. Ferner kann das Berechnungsmodell 11 auch dazu eingerichtet sein, die diagnostizierte oder prognostizierte Zustandskategorie 8 auszugeben, die der Handlungsanweisung 15 zu Grunde liegt. Dem Instandhaltungspersonal ist damit die Kategorie des Fehlers bekannt, der durch die Handlungsanweisung 15 behoben werden soll. Das Berechnungsmodell 11 kann einer Validierung 44 unterzogen werden.

Figur 3 zeigt schematisch den Ablauf des vorgeschlagenen Verfahrens 1: Mittels der Verfahrensschritten A) bis C) wird der Betriebsdatenbestand 6 erzeugt.

In dem Schritt A) werden eine Vielzahl von Luftfahrzeugen 3 (siehe Figur 7), in denen jeweils zwei der Klimatisierungseinrichtungen 23 eingebaut sind, betrieben. In einem Schritt B) werden Messwerte 5 generiert, mit denen individualisiert für einzelne Klimatisierungseinrichtungen 23 der Vielzahl von Klimatisierungseinrichtungen 23 deren Betriebszustand charakterisierbar ist, wenn diese sich in den jeweiligen Luftfahrzeugen 3 in Betrieb befinden. Die generierten Messwerte 5 werden dann in einem Schritt C) verknüpft mit den Identifikationscodes 4 der entsprechenden Klimatisierungseinrichtungen 23 und mit den Zeitstempeln 9 als Betriebsdatenbestand 6 gespeichert. Selbstverständlich kann der Betriebsdatenbestand 6 kontinuierlich ergänzt werden.

In dem Schritt a) wird eine Instandhaltungsmaßnahme an wenigstens einer Teilmenge der Klimatisierungseinrichtungen 23 vorgenommen, wobei das Durchführen einer Instandhaltungsmaßnahme jeweils das Ermitteln von möglichen Fehlerzuständen 7 umfasst. Wird ein Fehlerzustand 7 ermittelt, dann wird dieser einer korrespondierenden Zustandskategorie 8 aus einer Mehrzahl von vordefinierten Zustandskategorien 8 zugeordnet. Sofern die Klimatisierungseinrichtung 23 einen intakten Systemzustand 46 (siehe Figur 2) aufweist, wird die entsprechende Zustandskategorie 8b (siehe Figur 2) vergeben.

In einem Schritt b) werden die so über einen längeren Zeitraum hinweg für eine Vielzahl von Klimatisierungseinrichtungen 23 ermittelten Zustandskategorien 8 verknüpft mit dem Identifikationscode 4 derjenigen Klimatisierungseinrichtung 23, bei der der entsprechende Fehlerzustand 7 festgestellt wurde, und verknüpft mit einem Zeitstempel 9, der den Zeitpunkt des Feststellens des Fehlerzustandes 7 kennzeichnet, als Fehlerdatenbestand 10 gespeichert.

In einem Schritt c) wird das Berechnungsmodells 11 erstellt. Es ist dazu eingerichtet, individualisiert für einzelne Klimatisierungseinrichtungen 23 der gleichartigen Klimatisierungseinrichtungen 23 auf Basis der aktuellen Teilmenge 12 (siehe Figur 2) des Betriebsdatenbestandes 6 die Wahrscheinlichkeit 14 (siehe Figur 6) für das Vorliegen und/oder für das zukünftige Auftreten wenigstens einer der vordefinierten Zustandskategorien 8 zu ermitteln und auszugeben. Wie bereits vorangehend erläutert umfasst der Betriebsdatenbestand 6 die Messwerte 5, mit denen der Betriebszustand individualisiert für einzelne Klimatisierungseinrichtungen 23 der gleichartigen Klimatisierungseinrichtungen 23 charakterisierbar ist. In dem Betriebsdatenbestand 6 sind die Messwerte 5 jeweils mit dem Identifikationscode 4 der entsprechenden Klimatisierungseinrichtung 23 und mit einem den Messwerten 5 beim Speichern zugeordneten Zeitstempel 9 verknüpft. Das Erstellen des Berechnungsmodells 11 erfolgt dann auf Basis der historischen Teilmenge 13 des Betriebsdatenbestandes 12 und auf Basis des Fehlerdatenbestandes 10, also auf Basis der Trainingsdaten 43. In einem Schritt d) wird die Wahrscheinlichkeit 14 für das Vorliegen und/oder für das zukünftige Auftreten wenigstens einer der vordefinierten Zustandskategorien 8 individualisiert für einzelne Klimatisierungseinrichtungen 23 der gleichartigen Klimatisierungseinrichtungen 23 auf Basis einer aktuellen Teilmenge 12 des Betriebsdatenbestandes 6 ermittelt, indem die aktuelle Teilmenge 12 durch das erstellte Berechnungsmodell 11 verarbeitet wird.

In einem Schritt e) wird die Handlungsanweisung 15 zum Durchführen einer entsprechenden Instandhaltungsmaßnahme individualisiert für einzelne Klimatisierungseinrichtungen 23 der gleichartigen Klimatisierungseinrichtungen 23 auf Basis der ermittelten Wahrscheinlichkeit 14 für das Vorliegen und/oder das zukünftige Auftreten einer der vordefinierten Zustandskategorien 8 generiert.

Schließlich wird in einem Schritt f) eine Instandhaltungsmaßnahme an einer der gleichartigen Klimatisierungseinrichtungen 23 auf Basis der generierten Handlungsanweisung 15 durchgeführt.

Figur 4 zeigt schematisch den Vergleich miteinander korrespondierender Messwerte 5a bis 5e von zwei unterschiedlichen Klimatisierungseinrichtungen 23, die zeitglich in demselben Luftfahrzeug 23 eingebaut waren. Die Messwerte 5a bis 5e wurden jeweils für die erste und die zweite Klimatisierungseinrichtung 23 erfasst; da sie mit Zeitstempeln 9 versehen sind, können die Messwerte 5a bis 5e als Funktion der Zeit aufgetragen werden. In der Figur 4 werden die Messwerte 5a bis 5e für die erste und zweite Klimatisierungseinrichtung 23 als separate Verläufe in dem entsprechenden Diagramm dargestellt. Durch Bilden der Differenz der jeweils gleichen Messwerte 5 der zwei Klimatisierungseinrichtungen 23 zu definierten Zeitpunkten kann dann ein Vergleich der Messwerte 5a bis 5e der beiden Klimatisierungseinrichtungen 23 vorgenommen werden. Bei der Differenzbildung werden die Vorzeichen berücksichtigt.

Figur 5 zeigt einen zeitlichen Verlauf eines allgemeinen Systemzustandes 20 einer Klimatisierungseinrichtung 23. Bei dem allgemeinen Systemzustand 20 handelt es sich um einen numerischen Wert, der aus den durch das Berechnungsmodell 11 ermittelten Wahrscheinlichkeiten 14 für das Vorliegen bestimmter Zustandskategorien 8 ermittelt wird. Auch das Ermitteln des allgemeinen Systemzustandes 20 erfolgt mittels des Berechnungsmodells 11. Bei einem Wert von 0 ist der allgemeine Systemzustand 20 sehr gut, bei einem Wert von 1,0 ist der allgemeine Systemzustand 20 sehr schlecht. Ferner sind in dem Diagramm zwei Schwellwerte 21 und 22 eingezeichnet, die empirisch ermittelt wurden. Wenn der allgemeine Systemzustand 20 den ersten Schwellwert 21 überschreitet, aber den zweiten Schwellwerte 22 noch unterschreitet, dann wird durch das Berechnungsmodell 11 ein Signal in Form eines Hinweises ausgegeben. Das Instandhaltungspersonal wird dadurch über einen möglichen zukünftigen Fehlerzustand 7 informiert. Wenn der allgemeine Systemzustand 20 den zweiten Schwellwerte 22 überschreitet, dann wird durch das Berechnungsmodell 11 das Generieren einer Handlungsanweisung 15 ausgelöst.

Figur 6 zeigt beispielhaft den zeitlichen Verlauf der Wahrscheinlichkeiten 14 für das Vorliegen der folgenden Zustandskategorien 8: schadhafte Kühlturbine 24, schadhaftes Durchflusssteuerventil 26 und schadhafter Wärmetauscher 25. Diese Ausfallwahrscheinlichkeiten werden durch das Berechnungsmodell 11 ermittelt.

Schließlich zeigt die Figur 7 ein System 100 mit dem das vorangehend beschriebene Verfahren 1 angewendet werden kann. Es umfasst eine Flotte 53 mit einer Mehrzahl von Luftfahrzeugen 3 in Form von Flugzeugen, die jeweils zwei der gleichartigen Komponenten 2 in Form der Klimatisierungseinrichtungen 23 umfassen.

Es ist schematisch dargestellt, dass die Luftfahrzeuge 3 im Betrieb Daten generieren, die Teil des Betriebsdatenbestandes 6 sind. Innerhalb eines Betriebsdatensatzes sind ein oder mehrere Messwerte 5 mit einem entsprechenden Identifikationscode 4 und einem entsprechenden Zeitstempel 9 verknüpft. Eine Mehrzahl solcher Betriebsdatensätze bildet den Betriebsdatenbestand 6. Es versteht sich von selbst, dass der Betriebsdatenbestand 6 nicht an einem einzigen physischen Ort gespeichert sein muss.

Ferner ist die Instandhaltung 51 schematisch zu erkennen, die sich in Flugzeuginstandhaltung 52 und Komponenteninstandhaltung 49 unterteilt. In der Flugzeuginstandhaltung 52 können die Instandhaltungsmaßnahmen an der Klimatisierungseinrichtung 23 in einem Einbauzustand 16 vorgenommen werden; eine so ermittelte Zustandskategorie 8, gemeinsam mit dem Identifikationscode 4 und einem Zeitstempel 9 wird dann als Fehlerdatensatz zum Bestandteil des Fehlerdatenbestandes 10. In der Komponenteninstandhaltung 49 wird die Instandhaltungsmaßnahme an der Klimatisierungseinrichtung 23 in einem Ausbauzustand 17 vorgenommen; die räumliche Trennung der Klimatisierungseinrichtung 23 von dem Luftfahrzeug 3 ist ebenfalls zeichnerisch dargestellt. Auch die im Ausbauzustand 17 ermittelte Zustandskategorie 8, gemeinsam mit dem Identifikationscode 4 und einem Zeitstempel 9 wird dann als Fehlerdatensatz zum Bestandteil des Fehlerdatenbestandes 10.

Die historische Teilmenge 13 des Betriebsdatenbestandes 6 und der Fehlerdatenbestand 10 werden - wie vorangehend beschrieben - zur Erstellung und Optimierung des Berechnungsmodells 11 genutzt. Das Berechnungsmodell 11 ist als Computerprogrammprodukt 27 in den internen Speicher eines Computers 29 geladen. Der Computer 29 ist Bestandteil einer Bodenstation 28.

Ferner zeigt die Figur 7 beispielhaft ein Luftfahrzeug 3 der Flotte 53, das sich im Flugbetrieb befindet. Das Flugzeug generiert Messwerte 5, mit denen der Betriebszustand individualisiert für beide eingebauten Klimatisierungseinrichtungen 23 charakterisiert werden kann. Dies erfolgt mittels der Sensoren 18 der Klimatisierungseinrichtungen 23 selbst, aber hier beispielsweise auch mittels Sensoren 19, die dem Luftfahrzeug 3 zugeordnet sind, aber nicht Bestandteil der Klimatisierungseinrichtungen 23 sind. Die entsprechenden Messwerte 5 werden jeweils verknüpft mit einem Identifikationscode 4 und einem Zeitstempel 9 als Betriebsdatensatz während des Fluges drahtlos an eine Bodenstation 28 übermittelt. Selbstverständlich ist auch die Übermittlung der Betriebsdatensätze am Boden möglich. Die so generierten Betriebsdatensätze sind zunächst Bestandteil der aktuellen Teilmenge 12 des Betriebsdatenbestandes 6. Sie werden dem Berechnungsmodell 11 als Eingangsdaten zur Verfügung gestellt. Eine gegebenenfalls daraus abgeleitete Handlungsanweisung 15 und/oder auch der allgemeine Systemzustand (siehe Figur 5) und/oder die Wahrscheinlichkeiten 14 (siehe Figur 6) werden dem Instandhaltungspersonal auf einer Anzeigeeinrichtung 50, beispielsweise einem Display, angezeigt. Bei Anzeige einer Handlungsanweisung 15 wird diese durch das Instandhaltungspersonal an der entsprechenden Klimatisierungseinrichtung 23 durchgeführt.

## Patentansprüche

1. Verfahren (1) zur Instandhaltung einer Mehrzahl von gleichartigen Komponenten (2) für Luftfahrzeuge (3), wobei jede der gleichartigen Komponenten (2) über einen eindeutigen Identifikationscode (4) identifizierbar ist, wobei das Verfahren (1) durch folgende Verfahrensschritte gekennzeichnet ist:
a) Durchführung von Instandhaltungsmaßnahmen an wenigstens einer Teilmenge der gleichartigen Komponenten (2), wobei das Durchführen einer Instandhaltungsmaßnahme jeweils das Ermitteln von möglichen Fehlerzuständen (7) und bei Vorhandensein eines Fehlerzustandes (7) das Zuordnen des ermittelten Fehlerzustandes (7) zu einer Zustandskategorie (8) aus einer Mehrzahl von vordefinierten Zustandskategorien (8) umfasst;
b) Speichern der so ermittelten Zustandskategorien (8) jeweils verknüpft mit dem Identifikationscode (4) derjenigen Komponente (2), bei der der Fehlerzustand (7) festgestellt wurde, und verknüpft mit einem Zeitstempel (9), der den Zeitpunkt des Feststellens des Fehlerzustandes (7) kennzeichnet, als Fehlerdatenbestand (10);
c) Erstellen eines Berechnungsmodells (11), das dazu eingerichtet ist, individualisiert für einzelne Komponenten (2) der gleichartigen Komponenten (2) auf Basis einer aktuellen Teilmenge (12) eines Betriebsdatenbestandes (6) die Wahrscheinlichkeit (14) für das Vorliegen und/oder für das zukünftige Auftreten wenigstens einer der vordefinierten Zustandskategorien (8) zu ermitteln, wobei der Betriebsdatenbestand (6) Messwerte (5) umfasst, mit denen der Betriebszustand individualisiert für einzelne Komponenten (2) der gleichartigen Komponenten (2) charakterisierbar ist, wobei innerhalb des Betriebsdatenbestandes (6) die Messwerte (5) jeweils mit dem Identifikationscode (4) der entsprechenden Komponente (2) und mit einem dem jeweiligen Messwert (5) zugeordneten Zeitstempel (9) verknüpft sind, wobei das Erstellen des Berechnungsmodells (11) auf Basis einer historischen Teilmenge (13) des Betriebsdatenbestandes (6) und auf Basis des Fehlerdatenbestandes (10) erfolgt, wobei innerhalb der historischen Teilmenge (13) die Messwerte (5) mit Zeitstempeln (9) verknüpft sind, die zeitlich vor den Zeitstempeln (9) liegen, mit denen die Messwerte (5) der aktuellen Teilmenge (12) verknüpft sind;
d) Ermitteln der Wahrscheinlichkeit (14) für das Vorliegen und/oder für das zukünftige Auftreten wenigstens einer der vordefinierten Zustandskategorien (8) individualisiert für einzelne Komponenten (2) der gleichartigen Komponenten (2) auf Basis einer aktuellen Teilmenge (12) des Betriebsdatenbestandes (6), indem die aktuelle Teilmenge (12) durch das erstellte Berechnungsmodell (11) verarbeitet wird;
e) Generieren einer Handlungsanweisung (15) zum Durchführen einer Instandhaltungsmaßnahme individualisiert für einzelne Komponenten (2) der gleichartigen Komponenten (2) auf Basis der ermittelten Wahrscheinlichkeit (14) für das Vorliegen und/oder das zukünftige Auftreten einer der vordefinierten Zustandskategorien (8); und
f) Durchführen einer Instandhaltungsmaßnahme an einer der gleichartigen Komponenten (2) auf Basis der generierten Handlungsanweisung (15).

2. Verfahren nach Anspruch 1, **dadurch gekennzeichnet, dass** das Erzeugen des Betriebsdatenbestandes (6) die folgenden Verfahrensschritte umfasst:
A) Betreiben einer Vielzahl von Luftfahrzeugen (3), in denen jeweils wenigstens eine der gleichartigen Komponenten (2) eingebaut ist; und
B) Generieren der Messwerte (5), mit denen individualisiert für einzelne Komponenten (2) der gleichartigen Komponenten (2) deren Betriebszustand charakterisierbar ist, wenn diese sich in den jeweiligen Luftfahrzeugen (3) in Betrieb befinden;
C) Speichern der generierten Messwerte (5) verknüpft mit den Identifikationscodes (4) der entsprechenden Komponenten (2) und mit den entsprechenden Zeitstempeln (9) als Betriebsdatenbestand (6).

3. Verfahren nach Anspruch 2, **dadurch gekennzeichnet, dass**
- von einem der Luftfahrzeuge (3) im Betrieb generierte Daten des Betriebsdatenbestandes (6) an eine Bodenstation (28) übermittelt werden, und wobei
- das Berechnungsmodell (11) auf einem Computer (29) der Bodenstation (28) ausgeführt wird.

4. Verfahren (1) nach einem der Ansprüche 2 oder 3, **dadurch gekennzeichnet, dass**
- in einem der Luftfahrzeuge (3) wenigstens zwei der gleichartigen Komponenten (2) eingebaut sind, wobei
- ein Messwert (5), der den Betriebszustand der ersten Komponente in dem Luftfahrzeug (3) charakterisiert, mit einem Messwert (5), der den Betriebszustand der zweiten Komponente (2) innerhalb desselben Luftfahrzeugs (3) charakterisiert, verglichen wird,
- wobei der Vergleich dieser Messwerte (5) ein zusätzlicher Bestandteil der historischen Teilmenge (13) des Betriebsdatenbestandes (6) und/oder der aktuellen Teilmenge (12) des Betriebsdatenbestandes (6) ist, und/oder der Vergleich dieser Messwerte (5) durch das Berechnungsmodell (11) durchgeführt wird.

5. Verfahren (1) nach einem der vorangehenden Ansprüche, **dadurch gekennzeichnet, dass**
- eine zusätzliche Zustandskategorie (8) vorgesehen ist, die einen intakten Systemzustand (46) einer der gleichartigen Komponenten (2) kennzeichnet, wobei
- im Verfahrensschritt a) bei Nichtvorhandensein eines Fehlerzustandes (7) die Zuordnung zu dieser Zustandskategorie (8) erfolgt.

6. Verfahren (1) nach einem der vorangehenden Ansprüche, **dadurch gekennzeichnet, dass**
- der Schritt d) mit neu generierten Daten, die der aktuellen Teilmenge (12) des Betriebsdatenbestandes (6) hinzugefügt werden oder die die aktuelle Teilmenge ersetzen, wiederholt wird, so dass die Wahrscheinlichkeit (14) für das Vorliegen und/oder für das zukünftige Auftreten wenigstens einer der vordefinierten Zustandskategorien (8) in vorgegebenen zeitlichen Abständen aktualisiert bereitgestellt wird.

7. Verfahren (1) nach einem der vorangehenden Ansprüche, **dadurch gekennzeichnet, dass** der Schritt a) die folgenden Teilschritte umfasst:
- Durchführen von Instandhaltungsmaßnahmen an wenigstens einer Teilmenge der gleichartigen Komponenten (2) in einem Einbauzustand (16), wobei in dem Einbauzustand (16) die jeweilige Komponente (2) in einem der Luftfahrzeuge (3) eingebaut ist; und
- Durchführen von Instandhaltungsmaßnahmen an wenigstens einer Teilmenge der gleichartigen Komponenten (2) in einem Ausbauzustand (17), wobei in dem Ausbauzustand (17) die jeweilige Komponente (2) aus einem der Luftfahrzeuge (3) ausgebaut ist.

8. Verfahren (1) nach einem der vorangehenden Ansprüche,
**dadurch gekennzeichnet, dass**
- jede der gleichartigen Komponenten (2) wenigstens einen Sensor (18) umfasst, mit dem im Betrieb Messwerte (5) zum Charakterisieren des Betriebszustandes dieser Komponente (2) generiert werden; und/oder
- jedes der Luftfahrzeuge (3) wenigstens einen Sensor (19) umfasst, mit dem im Betrieb Messwerte (5) zum Charakterisieren des Betriebszustandes einer der in dem Luftfahrzeug (3) eingebauten Komponente (2) der gleichartigen Komponenten (2) generiert werden.

9. Verfahren (1) nach einem der vorangehenden Ansprüche,
**dadurch gekennzeichnet, dass**
- das Berechnungsmodell (11) dazu eingerichtet ist, einen allgemeinen Systemzustand (20) individualisiert für einzelne Komponenten (2) der gleichartigen Komponenten (2) zu ermitteln.

10. Verfahren (1) nach Anspruch 9, **dadurch gekennzeichnet, dass**
- der allgemeine Systemzustand (20) auf Basis der ermittelten Wahrscheinlichkeit (14) für das Vorliegen und/oder für das zukünftige Auftreten wenigstens einer der vordefinierten Zustandskategorien (8) ermittelt wird.

11. Verfahren (1) nach einem der Ansprüche 9 oder 10, **dadurch gekennzeichnet, dass**
- der allgemeine Systemzustand (20) durch einen numerischen Wert repräsentiert wird, wobei
- das Berechnungsmodell (11) dazu eingerichtet ist, den den allgemeine Systemzustand (20) repräsentierenden numerischen Wert mit einem ersten und einem zweiten Schwellwert (21, 22) zu vergleichen, wobei
- bei einem numerischen Wert zwischen dem ersten Schwellwert (21) und dem zweiten Schwellwert (22) ein Signal ausgegeben wird, und wobei
- bei einem numerischen Wert, der den zweiten Schwellwert (22) überschreitet, das Generieren der Handlungsanweisung (15) gemäß Schritt e) ausgelöst wird.

12. Verfahren (1) nach einem der vorangehenden Ansprüche,
**dadurch gekennzeichnet, dass**
- das Berechnungsmodell (11) im Schritt c) wenigstens teilweise durch maschinelles Lernen (ML) erstellt und/oder angepasst wird, wobei
- die historische Teilmenge (13) des Betriebsdatenbestandes (6) und der Fehlerdatenbestand (10) als Trainingsdaten (43) zum maschinellen Lernen (ML) genutzt werden.

13. Verfahren (1) nach einem der vorangehenden Ansprüche,
**dadurch gekennzeichnet, dass**
- es sich bei den gleichartigen Komponenten (2) jeweils um eine Klimatisierungseinrichtung (23), umfassend eine Kühlturbine (24), wenigstens einen, vorzugsweise vier, Wärmetauscher (25) und ein Durchflusssteuerventil (26), handelt.

14. Verfahren (1) nach Anspruch 13, **dadurch gekennzeichnet, dass**
- die Mehrzahl von vordefinierten Zustandskategorien (8) einen oder mehrere der folgenden Zustandskategorien (8) umfasst: schadhafte Kühlturbine (24), schadhafter Wärmetauscher (25) und/oder schadhaftes Durchflusssteuerventil (26).

15. System (100) mit einer Flotte umfassend eine Mehrzahl von Luftfahrzeugen (3) sowie eine Mehrzahl gleichartiger Komponenten (2), insbesondere eine Mehrzahl gleichartiger Klimatisierungseinrichtungen (23) umfassend eine Kühlturbine (24), wenigstens einen, vorzugsweise vier, Wärmetauscher (25) und wenigstens ein Durchflusssteuerventil (26), wobei in jedes der Luftfahrzeuge (3) wenigstens eine der gleichartigen Komponenten (2) eingebaut ist,
**dadurch gekennzeichnet, dass**
- die Instandhaltung wenigstens einer Teilmenge der gleichartigen Komponenten (2) unter Anwendung des Verfahrens (1) gemäß einem der vorangehenden Ansprüche durchgeführt wird, wobei
- das System (100) ein Computerprogrammprodukt (27) umfasst, das dazu eingerichtet ist, die Verfahrensschritte c) bis e) gemäß Anspruch 1 durchzuführen.

## Claims

1. Method (1) for maintaining a plurality of similar components (2) for aircraft (3), wherein each of the similar components (2) is identifiable by way of a unique identification code (4), wherein the method (1) is **characterized by** the following method steps:
a) performing maintenance measures on at least a subset of the similar components (2), wherein performing a maintenance measure in each case comprises determining possible error states (7) and, if an error state (7) is present, assigning the determined error state (7) to a state category (8) from a plurality of predefined state categories (8);
b) storing the state categories (8) thus determined, each linked to the identification code (4) of the component (2) in which the error state (7) was detected, and linked to a timestamp (9) that identifies the time at which the error state (7) was detected, as an error database (10);
c) creating a computation model (11)that is configured to determine the probability (14) of the presence and/or future occurrence of at least one of the predefined state categories (8) individualized for individual components (2) of the similar components (2) on the basis of a current subset (12) of an operating database (6), wherein the operating database (6) comprises measured values (5) with which the operating state can be characterized, individualized for individual components (2) of the similar components (2), wherein, within the operating database (6), the measured values (5) are each linked to the identification code (4) of the corresponding component (2) and to a timestamp (9) assigned to the particular measured value (5), wherein the creation of the computation model (11) is carried out on the basis of a historical subset (13) of the operating database (6) and on the basis of the error database (10), wherein, within the historical subset (13), the measured values (5) are linked to timestamps (9) that are temporally prior to the timestamps (9) to which the measured values (5) of the current subset (12) are linked;
d) determining the probability (14) of the presence and/or future occurrence of at least one of the predefined state categories (8) individualized for individual components (2) of the similar components (2) on the basis of a current subset (12) of the operating database (6), by processing the current subset (12) by means of the created computation model (11);
e) generating an action instruction (15) for performing a maintenance measure individualized for individual components (2) of the similar components (2) on the basis of the determined probability (14) of the presence and/or future occurrence of one of the predefined state categories (8); and
f) performing a maintenance measure on one of the similar components (2) on the basis of the generated action instruction (15).

2. Method according to claim 1, **characterized in that** generating the operating database (6) comprises the following method steps:
A) operating a plurality of aircraft (3), each of which has at least one of the similar components (2) installed; and
B) generating the measured values (5) with which the operating state of individual components (2) of the similar components (2) can be characterized when they are in operation in the particular aircraft (3);
C) storing the generated measured values (5) linked to the identification codes (4) of the corresponding components (2) and to the corresponding timestamps (9) as an operating database (6).

3. Method according to claim 2, **characterized in that**
- data from the operating database (6) generated by one of the aircraft (3) during operation are transmitted to a ground station (28), and wherein
- the computation model (11) is executed on a computer (29) of the ground station (28).

4. Method (1) according to any of claims 2 or 3, **characterized in that**
- at least two of the similar components (2) are installed in one of the aircraft (3), wherein
- a measured value (5) characterizing the operating state of the first component in the aircraft (3) is compared with a measured value (5) characterizing the operating state of the second component (2) within the same aircraft (3),
- wherein the comparison of these measured values (5) is an additional component of the historical subset (13) of the operating database (6) and/or the current subset (12) of the operating database (6), and/or the comparison of these measured values (5) is carried out by the computation model (11).

5. Method (1) according to any of the preceding claims, **characterized in that**
- an additional state category (8) is provided that characterizes an intact system state (46) of one of the similar components (2), wherein,
- in method step a), if an error state (7) is not present, the assignment to this state category (8) takes place.

6. Method (1) according to any of the preceding claims, **characterized in that**
- step d) is repeated with newly generated data that are added to the current subset (12) of the operating database (6) or replace the current subset, so that the probability (14) of the presence and/or future occurrence of at least one of the predefined state categories (8) is provided in an updated manner at predetermined time intervals.

7. Method (1) according to any of the preceding claims, **characterized in that** step a) comprises the following substeps:
- performing maintenance measures on at least a subset of the similar components (2) in an installed state (16), wherein, in the installed state (16), the particular component (2) is installed in one of the aircraft (3); and
- performing maintenance measures on at least a subset of the similar components (2) in a removed state (17), wherein, in the removed state (17), the particular component (2) is removed from one of the aircraft (3).

8. Method (1) according to any of the preceding claims, **characterized in that**
- each of the similar components (2) comprises at least one sensor (18) with which, during operation, measured values (5) are generated to characterize the operating state of this component (2); and/or
- each of the aircraft (3) comprises at least one sensor (19) with which, during operation, measured values (5) are generated to characterize the operating state of one of the components (2) of the similar components (2) installed in the aircraft (3).

9. Method (1) according to any of the preceding claims, **characterized in that**
- the computation model (11) is configured to determine a general system state (20) individualized for individual components (2) of the similar components (2).

10. Method (1) according to claim 9, **characterized in that**
- the general system state (20) is determined on the basis of the determined probability (14) of the presence and/or future occurrence of at least one of the predefined state categories (8).

11. Method (1) according to any of claims 9 or 10, **characterized in that**
- the general system state (20) is represented by a numerical value, wherein
- the computation model (11) is configured to compare the numerical value representing the general system state (20) with a first and a second threshold value (21, 22), wherein
- a signal is output if a numerical value is between the first threshold value (21) and the second threshold value (22), and wherein,
- if a numerical value exceeds the second threshold value (22), the generation of the action instruction (15) according to step e) is triggered.

12. Method (1) according to any of the preceding claims, **characterized in that**
- the computation model (11) in step c) is created and/or adapted at least partially by way of machine learning (ML), wherein
- the historical subset (13) of the operating database (6) and the error database (10) are used as training data (43) for machine learning (ML).

13. Method (1) according to any of the preceding claims, **characterized in that**
- the similar components (2) are in each case an air conditioning device (23) comprising a cooling turbine (24), at least one, preferably four, heat exchangers (25), and a flow control valve (26).

14. Method (1) according to claim 13, **characterized in that**
- the plurality of predefined state categories (8) comprise one or more of the following state categories (8): defective cooling turbine (24), defective heat exchanger (25), and/or defective flow control valve (26).

15. System (100) having a fleet comprising a plurality of aircraft (3) and a plurality of similar components (2), in particular a plurality of similar air conditioning devices (23) comprising a cooling turbine (24), at least one, preferably four, heat exchangers (25), and at least one flow control valve (26), wherein at least one of the similar components (2) is installed in each of the aircraft (3), **characterized in that**
- the maintenance of at least a subset of the similar components (2) is carried out using the method (1) according to any of the preceding claims, wherein
- the system (100) comprises a computer program product (27) that is configured to carry out the method steps c) to e) according to claim 1.

## Revendications

1. Procédé (1) pour entretenir une pluralité de composants similaires (2) pour des aéronefs (3), dans lequel chacun des composants similaires (2) peut être identifié par un code d'identification unique (4), dans lequel le procédé (1) est **caractérisé par** les étapes de procédé suivantes :
a) mettre en œuvre des mesures d'entretien sur au moins un sous-ensemble des composants similaires (2), dans lequel la mise en œuvre d'une mesure d'entretien comprend respectivement de déterminer des états de défaut (7) possibles et, en cas d'existence d'un état de défaut (7), affecter l'état d'erreur (7) déterminé à une catégorie d'état (8) parmi une pluralité de catégories d'état (8) prédéfinies ;
b) enregistrer les catégories d'état (8) ainsi déterminées, respectivement associées au code d'identification (4) du composant (2) pour lequel l'état d'erreur (7) a été déterminé, et associées à un horodatage (9) qui indique l'instant auquel l'état d'erreur (7) a été déterminé, en tant que base de données de défauts (10) ;
c) créer un modèle de calcul (11) qui est configuré pour déterminer de manière individualisée pour des composants individuels (2) des composants similaires (2), sur la base d'un sous-ensemble actuel (12) d'une base de données de fonctionnement (6), la probabilité (14) d'existence et/ou de future occurrence d'au moins une des catégories d'état prédéfinies (8), dans lequel la base de données de fonctionnement (6) comprend des valeurs de mesure (5) au moyen desquelles l'état de fonctionnement peut être caractérisé de manière individualisée pour des composants individuels (2) des composants similaires (2), dans lequel, au sein de la base de données de fonctionnement (6), les valeurs de mesure (5) sont respectivement associées au code d'identification (4) du composant (2) correspondant et à un horodatage (9) affecté à la valeur de mesure (5) respective, dans lequel la création du modèle de calcul (11) est effectuée sur la base d'un sous-ensemble historique (13) de la base de données de fonctionnement (6) et sur la base de la base de données de défauts (10), dans lequel, au sein du sous-ensemble historique (13), les valeurs de mesure (5) sont associées à des horodatages (9) qui sont chronologiquement avant les horodatages (9) auxquels sont associées les valeurs de mesure (5) du sous-ensemble actuel (12) ;
d) déterminer la probabilité (14) d'existence et/ou de future occurrence d'au moins une des catégories d'état prédéfinies (8) de manière individualisée pour des composants individuels (2) des composants similaires (2), sur la base d'un sous-ensemble actuel (12) de la base de données de fonctionnement (6), le sous-ensemble actuel (12) étant traité par le modèle de calcul (11) créé ;
e) générer une instruction d'intervention (15) pour mettre en œuvre une mesure d'entretien de manière individualisée pour des composants individuels (2) des composants similaires (2) sur la base de la probabilité (14) déterminée d'existence et/ou de future occurrence d'une des catégories d'état (8) prédéfinies ; et
f) mettre en œuvre une mesure d'entretien sur l'un des composants similaires (2) sur la base de l'instruction d'intervention (15) générée.

2. Procédé selon la revendication 1, **caractérisé en ce que** la génération de la base de données de fonctionnement (6) comprend les étapes de procédé suivantes :
A) faire fonctionner une pluralité d'aéronefs (3) dans lesquels au moins un des composants similaires (2) est respectivement monté ; et
B) générer les valeurs de mesure (5) avec lesquelles l'état de fonctionnement peut être caractérisé de manière individualisée pour des composants individuels (2) des composants similaires (2) lorsque ceux-ci sont en service dans les aéronefs (3) respectifs ;
C) enregistrer les valeurs de mesure (5) générées associées aux codes d'identification (4) des composants (2) correspondants et aux horodatages (9) correspondants, en tant que base de données de fonctionnement (6).

3. Procédé selon la revendication 2, **caractérisé en ce que**
- des données de la base de données de fonctionnement (6) générées pendant le fonctionnement par l'un des aéronefs (3) sont transmises à une station au sol (28), et dans lequel
- le modèle de calcul (11) est exécuté sur un ordinateur (29) de la station au sol (28).

4. Procédé (1) selon l'une des revendications 2 ou 3, **caractérisé en ce que**
- au moins deux des composants similaires (2) sont montés dans l'un des aéronefs (3), dans lequel
- une valeur de mesure (5) qui caractérise l'état de fonctionnement du premier composant dans l'aéronef (3) est comparée à une valeur de mesure (5) qui caractérise l'état de fonctionnement du second composant (2) à l'intérieur du même aéronef (3),
- dans lequel la comparaison de ces valeurs de mesure (5) est un élément supplémentaire du sous-ensemble historique (13) de la base de données de fonctionnement (6) et/ou du sous-ensemble actuel (12) de la base de données de fonctionnement (6), et/ou la comparaison de ces valeurs (5) est effectuée par le modèle de calcul (11).

5. Procédé (1) selon l'une des revendications précédentes, **caractérisé en ce que**
- une catégorie d'état supplémentaire (8) est prévue, laquelle catégorie indiquant un état de système intact (46) de l'un des composants similaires (2), dans lequel
- à l'étape de procédé a), en l'absence d'un état d'erreur (7), l'affectation à cette catégorie d'état (8) est effectuée.

6. Procédé (1) selon l'une des revendications précédentes, **caractérisé en ce que**
- l'étape d) est répétée avec des données nouvellement générées qui sont ajoutées au sous-ensemble actuel (12) de la base de données de fonctionnement (6) ou qui remplacent le sous-ensemble actuel, de sorte que la probabilité (14) d'existence et/ou de future occurrence d'au moins une des catégories d'état (8) prédéfinies est fournie de manière actualisée à des intervalles de temps prédéfinis.

7. Procédé (1) selon l'une des revendications précédentes, **caractérisé en ce que** l'étape a) comprend les sous-étapes suivantes :
- mettre en œuvre des mesures d'entretien sur au moins un sous-ensemble des composants similaires (2) dans un état monté (16), dans lequel, à l'état monté (16), le composant (2) respectif est monté dans l'un des aéronefs (3); et
- mettre en œuvre des mesures d'entretien sur au moins un sous-ensemble des composants similaires (2) dans un état démonté (17), dans lequel, à l'état démonté, (17), le composant (2) respectif est démonté de l'un des aéronefs (3).

8. Procédé (1) selon l'une des revendications précédentes, **caractérisé en ce que**
- chacun des composants similaires (2) comprend au moins un capteur (18) au moyen duquel sont générées des valeurs de mesure (5) pendant le fonctionnement afin de caractériser l'état de fonctionnement de ce composant (2) ; et/ou
- chacun des aéronefs (3) comprend au moins un capteur (19) au moyen duquel sont générées des valeurs de mesure (5) pendant le fonctionnement afin de caractériser l'état de fonctionnement d'un des composants (2) des composants similaires (2) montés dans l'aéronef (3).

9. Procédé (1) selon l'une des revendications précédentes, **caractérisé en ce que**
- le modèle de calcul (11) est configuré pour déterminer un état général du système (20) de manière individualisée pour des composants individuels (2) des composants similaires (2).

10. Procédé (1) selon la revendication 9, **caractérisé en ce que**
- l'état général du système (20) est déterminé sur la base de la probabilité (14) déterminée d'existence et/ou de future occurrence d'au moins une des catégories d'état (8) prédéfinies.

11. Procédé (1) selon l'une des revendications 9 ou 10, **caractérisé en ce que**
- l'état général du système (20) est représenté par une valeur numérique, dans lequel
- le modèle de calcul (11) est configuré pour comparer la valeur numérique représentant l'état général du système (20) avec une première et une seconde valeur de seuil (21, 22), dans lequel
- un signal est émis pour une valeur numérique comprise entre la première valeur de seuil (21) et la seconde valeur de seuil (22), et dans lequel
- si une valeur numérique dépasse la seconde valeur de seuil (22), la génération de l'instruction d'intervention (15) selon l'étape e) est déclenchée.

12. Procédé (1) selon l'une des revendications précédentes, **caractérisé en ce que**
- le modèle de calcul (11) à l'étape c) est créé et/ou adapté au moins en partie par apprentissage automatique (ML), dans lequel
- le sous-ensemble historique (13) de la base de données de fonctionnement (6) et la base de données de défauts (10) sont utilisés comme des données d'apprentissage (43) pour l'apprentissage automatique (ML).

13. Procédé (1) selon l'une des revendications précédentes, **caractérisé en ce que**
- les composants similaires (2) sont respectivement un dispositif de climatisation (23) comprenant une turbine de refroidissement (24), au moins un, de préférence quatre, échangeurs de chaleur (25) et une vanne de commande de débit (26).

14. Procédé (1) selon la revendication 13, **caractérisé en ce que**
- la pluralité de catégories d'état (8) prédéfinies comprend une ou plusieurs des catégories d'état (8) suivantes : turbine de refroidissement (24) défectueuse, échangeur de chaleur (25) défectueux et/ou vanne de commande de débit (26) défectueuse.

15. Système (100) avec une flotte comprenant une pluralité d'aéronefs (3) ainsi qu'une pluralité de composants similaires (2), en particulier une pluralité de dispositifs de climatisation similaires (23) comprenant une turbine de refroidissement (24), au moins un, de préférence quatre, échangeurs de chaleur (25) et au moins une vanne de commande de débit (26), dans lequel, dans chacun des aéronefs (3), au moins un des composants similaires (2) est monté, **caractérisé en ce que**
- l'entretien d'au moins un sous-ensemble des composants similaires (2) est effectué en appliquant le procédé (1) selon l'une des revendications précédentes, dans lequel
- le système (100) comprend un produit de programme informatique (27) qui est configuré pour réaliser les étapes de procédé c) à e) selon la revendication 1.
